# EUROPEAN PATENT APPLICATION

(11) **EP 3 926 025 A1**
(43) Date of publication of application: **22.12.2021**
(21) Application number: 20179879.0
(22) Date of filing: 15.06.2020
(51) Int. Cl.: C10G 3/00

(54) **PROCESS FOR HYDROTREATMENT OF MATERIALS FROM RENEWABLE SOURCES**

(71) Applicant: Shell Internationale Research Maatschappij B.V., 2596 HR The Hague (NL)
(72) Inventor: The designation of the inventor has not yet been filed
(74) Representative: Shell Legal Services IP

(57) **Abstract**

The present invention relates to a process for the hydrotreatment of a feedstock comprising materials from renewable sources, the process comprising (**a**) in a reactor performing (a) hydrogenation and/or hydrodeoxygenation reaction(s) which comprise(s) contacting hydrogen and said feedstock with a catalyst under hydrogenation and/or hydrodeoxygenation conditions, the catalyst being distributed over two or more catalyst beds, and each catalyst bed having an inlet and an outlet;
wherein at least a part of the heat generated by the hydrogenation and/or hydrodeoxygenation reaction(s) is removed from the reaction mixture between the catalyst beds via one or more heat exchangers.

The process of the invention is useful in energy-efficiently producing fuels and/or fuel components and/or chemical feedstocks, and consequently, in reducing the carbon footprint of transportation and/or chemical industries.

## Description

### FIELD OF THE INVENTION

The present invention relates to a process for the hydrotreatment of a feedstock comprising materials from renewable sources, useful for the production of fuels, fuel components and/or chemical feedstocks.

### BACKGROUND OF THE INVENTION

The increased demand for energy resulting from worldwide economic growth and development have contributed to an increase in concentration of greenhouse gases in the atmosphere. This has been regarded as one of the most important challenges facing mankind in the 21^{st} century. It is necessary to reduce the global carbon footprint to mitigate global warming. The capacity of the earth's system to absorb greenhouse gas emissions is already exhausted, and under the Paris climate agreement, current emissions must be fully stopped until around 2070. To realize these reductions, the world must evolve to move away from solely conventional carbon-based fossil fuel energy carriers. A timely implementation of the energy transition requires multiple approaches in parallel. For example, energy conservation, improvements in energy efficiency and electrification may play a role, but also efforts to use renewable resources for the production of fuels and fuel components. For example, vegetable oils, oils obtained from algae, and animal fats are seen as new sources for fuel production. Also deconstructed materials are seen as a potential source for renewable fuels materials, such as pyrolyzed recyclable materials or wood.

Renewable materials may comprise materials such as triglycerides with very high molecular mass and high viscosity, which means that using them directly or as a mixture in fuel bases is problematic for modern engines. On the other hand, the hydrocarbon chains which constitute for example triglycerides are essentially linear and their length (in terms of number of carbon atoms) is compatible with the hydrocarbons used in/as fuels. Thus, it is attractive to transform triglyceride comprising feeds in order to obtain good quality fuel components.

Examples of such processes are available. In US 4,992,605 for example is disclosed a process for producing hydrocarbon products in the diesel boiling range, mainly C15-C18 straight chain paraffins, the process comprising hydroprocessing vegetable oils or some fatty acids at conditions effective to cause hydrogenation, hydrotreating and hydrocracking of the feedstock (temperature 350-450 °C; pressure 4.8-15.2 MPa; liquid hourly space velocity 0.5-5.0 hr-1) using a commercially available hydroprocessing catalyst. Cobalt-molybdenum and nickel-molybdenum hydroprocessing catalysts are mentioned as suitable catalysts.

In US 5,705,722 is disclosed a process for producing liquid hydrocarbons boiling in the diesel fuel range from a biomass feedstock comprising tall oil with a relatively high content of unsaturated compounds. The feedstock is hydroprocessed at a temperature of at least 350 °C.

Renewable materials may also comprise unsaturated compounds. Hydrogenation of unsaturated compounds such as e.g. (di-)olefins is highly exothermic. Renewable feedstocks with a high content of unsaturated compounds will generate a significant heat release upon complete hydrogenation of all unsaturated compounds. Hydrodeoxygenation is also an exothermic reaction. When renewable feedstocks with a high content of oxygenates are being hydrodeoxygenated, a significant heat release will be noticed. Renewable feedstocks may have oxygenates that are unsaturated compounds as well. Especially when a renewable feedstock with both a high content of unsaturated compounds and a high content of oxygenates is being hydrogenated and hydrodeoxygenated very significant heat release will be generated. The high exothermicity will result in a large temperature increase over the catalyst beds in the reactor, if no measures are taken.

Currently, the high exothermicity in hydroprocessing of renewable materials is generally dealt with by application of a high liquid recycle rate to the reactor inlet in combination with a significant amount of liquid quench, which adds to the total hydraulic load of the system and to increased size of equipment. Further, if gas would be used as quench, the amount of gas that would be required to quench the exothermicity would be very large.

Since there is an increasing demand for fuels and/or fuel components and/or chemical feedstocks derived from renewable sources, there is also a need for a process for energy-efficiently producing those components/feedstocks.

The process of the present disclosure provides a solution to said need.

### SUMMARY OF THE INVENTION

Accordingly, the present disclosure relates to a process for the hydrotreatment of a feedstock comprising materials from renewable sources, the process comprising (**a**) in a reactor performing (a) hydrogenation and/or hydrodeoxygenation reaction(s) which comprise(s) contacting hydrogen and said feedstock with a catalyst under hydrogenation and/or hydrodeoxygenation conditions, the catalyst being distributed over two or more catalyst beds, and each catalyst bed having an inlet and an outlet;
wherein at least a part of the heat generated by the hydrogenation and/or hydrodeoxygenation reaction(s) is removed from the reaction mixture between the catalyst beds via one or more heat exchangers. The process of the invention is useful for the production of renewable fuels, fuel components and/or chemical feedstocks.

Advantageously, in the presently disclosed process, by removing the heat via heat exchangers (either external to the reactor or internal) no or much less liquid or gas is required as quench. The application of no / much less liquid recycle reduces the energy consumption as well as the size of equipment.

### DETAILED DESCRIPTION OF THE INVENTION

The present invention relates to the hydrotreatment/ hydroprocessing of a feedstock comprising materials from renewable sources. Such feedstocks include materials suitable for the production of fuels or fuel components other than feedstocks derived from petroleum crude oil or natural gas condensate. Mixtures of renewable feedstock with petroleum derived hydrocarbons may also be used as feedstock, or co-processing thereof. Petroleum derived hydrocarbons include all fractions from petroleum crude oil or natural gas condensate obtained by fractionation and/or petroleum refining processing steps.

A preferred class of renewable materials are bio-renewable fats and oils comprising triglycerides, diglycerides, monoglycerides and free fatty acids or fatty acid esters derived from bio-renewable fats and oils. Examples of such fatty acid esters include, but are not limited to, fatty acid methyl esters, fatty acid ethyl esters. The bio-renewable fats and oils include both edible and non-edible fats and oils. Examples of these bio-renewable fats and oils include, but are not limited to, algal oil, brown grease, canola oil, carinata oil, castor oil, coconut oil, colza oil, corn oil, cottonseed oil, fish oil, hempseed oil, jathropha oil, lard, linseed oil, milk fats, mustard oil, olive oil, palm oil, peanut oil, rapeseed oil, sewage sludge, soy oils, soybean oil, sunflower oil, tall oil, tallow, train oil, used cooking oil, yellow grease.

Another preferred class of renewable materials are liquids derived from biomass and waste liquefaction processes. Examples of such liquefaction processes include, but are not limited to, (hydro)pyrolysis, hydrothermal liquefaction, plastics liquefaction.

The renewable materials to be used as feedstock in the process of the present invention may contain impurities. Examples of such impurities include, but are not limited to, solids, iron, chloride, phosphorus, alkali metals and alkaline-earth metals. If required, these impurities can be removed from the renewable feedstock before being introduced to the process of the present invention. Methods to remove these impurities are known to the person skilled in the art.

The process according to the present disclosure is suitable for the production of fuels and/or fuel components and/or chemical feedstocks, which products comprise bionaphtha, biojet, biodiesel and/or bio chemical feedstocks such as feedstocks for ethylene crackers.

According to the present disclosure, at least a part of the heat generated by the hydrogenation and/or hydrodeoxygenation reaction(s) is removed from the reaction mixture between the catalyst beds via one or more heat exchangers. Preferably, if multiple catalyst beds are used, the one or more heat exchangers are placed in one or optionally more location(s) following the catalyst bed(s) in which the largest temperature increase develops due to exothermic reactions, when considering all temperature changes developing in the complete hydrogenation and/or hydrodeoxygenation process. The hydroprocessing of certain renewable materials is particularly highly exothermic, for example when the materials comprise high concentrations of unsaturated molecules, which results in large temperature increases over the reactor beds. In one embodiment, by installing one or more heat exchanger(s) internally in the reactor, in between the catalyst beds, heat can be removed without the need to introduce large amounts of gas or liquid as quench. Alternatively, in another embodiment, a draw-off tray in between the catalyst beds combined with a pump and external heat exchanger may be considered, as this allows more flexibility to design and control the heat exchanger duty.

In the process according to the invention, hydrogen and a renewable feedstock are first contacted with a hydrogenation catalyst under hydrogenation and/or hydrodeoxygenation conditions (step (**a**)). Hydrogenation and/or hydrodeoxygenation conditions include pressures between 1.0 MPa - 20 MPa, temperatures of 200 - 410°C and liquid hourly space velocities of 0.3 m³/m³.h - 5 m³/m³.h based on fresh feed. The term "fresh feed" herein means the feedstock comprising material from renewable sources, including any mixed or co-processed petroleum derived hydrocarbons, but excludes any optional diluent. Further, the hydrogenation and/or hydrodeoxygenation conditions at least comprise a process temperature in the range of from 200 to 400 °C, preferably of from 240 to 390 °C, more preferably of from 260 to 385 °C.
Preferably, the pressure is selected from 2.0 MPa - 15 MPa.

Optionally, and advantageously, in addition to the feedstock and hydrogen, also a diluent is introduced into step **(a)** to more flexibly control temperature changes. The optional diluent acts as a heat sink and can be any suitable hydrocarbon stream. Preferably, the optional diluent stream is a recycled liquid product from the hydrogenation and/or hydrodeoxygenation step (**a**) or an optional hydroisomerisation step (**b**), selective hydrocracking step (**c**) or hydrodearomatization step (**d**) most preferably from the hydrogenation and/or hydrodeoxygenation step (**a**). To save costs by limiting the hydraulic capacity of the hydrogenation and/or hydrodeoxygenation reactor(s) and the energy required for pumping around this diluent, the ratio of diluent to fresh feed is kept low while it is still ensured it is sufficient to act as a heat sink to limit the total exotherm per catalyst bed. Too high exotherms per catalyst bed may result in e.g. hot spots, maldistribution of gas and liquid, poor controllability and thermal stability of operation and higher catalyst deactivation. For the usual hydrotreating (i.e. hydrogenation, hydrodeoxygenation, etc.) catalysts consisting of metalsulphides on an amorphous alumina support the exotherms per catalyst bed are preferably not more than 80°C, more preferably not more than 65°C, even more preferably not more than 50°C. The ratio of diluent to fresh feed may depend on the type of feedstock, with a higher ratio for feedstocks with a higher concentration of (poly)unsaturated compounds. Suitable ranges for diluent to fresh feed volumetric ratio's may be between 0.1:1 to 8:1.

The catalyst in step (**a**) is distributed over two or more catalyst beds. The catalyst beds can be located in one reactor or in multiple reactors. Hydrogenation/ hydrodeoxygenation catalysts are well known to the person skilled in the art and can be catalysts containing one or more base metals. Non limiting examples of such catalysts are nickel, molybdenum, nickel/molybdenum, cobalt/molybdenum dispersed on a high surface area support such as e.g. gamma-alumina. The base metal catalysts can be present as metal sulfides under reaction conditions. Hydrogenation/hydrodeoxygenation catalysts can also be one or more noble metals on a high surface area support. Non limiting examples are e.g. platinum, palladium or platinum/palladium on gamma-alumina.

In a preferred embodiment according to this disclosure, after the first catalyst bed at least part of the effluent is being sent through a heat exchanger. Heat exchangers are known in the art. Non limiting examples of heat exchangers are shell and tube heat exchangers and plate type heat exchangers. In a first embodiment this heat exchanger is located inside the reactor and heat is being exchanged from the whole effluent of the first catalyst bed, i.e. combined gas and liquid effluent. In this heat exchanger the process gas and liquid do not mix with the heat exchanging medium on the coolant side of the heat exchanger. The gas and liquid that exit the heat exchanger on the process side, now having a lower temperature than the gas and liquid stream on the process side that had entered the heat exchanger, preferably pass through a re-distribution tray before being contacted with the next catalyst bed. In the re-distribution tray the gas and liquid are being re-distributed over the cross section of the reactor to avoid maldistribution of gas and liquid in the next catalyst bed. Optionally, and advantageously, some quench gas or quench liquid can be added between the heat exchanger and the re-distribution tray. The quench gas or quench liquid can be added via a quench device that limits the radial temperature differences over the cross section of the reactor and catalyst bed.

According to an embodiment of the present invention, the amount of heat removed in the one or more heat exchangers results in at least 50% reduction of the temperature between the outlet of the catalyst bed preceding the one or more heat exchanger(s) and the inlet of the catalyst bed immediately following after said one or more heat exchanger(s). Preferably, the amount of heat removed in the heat exchanger will result in more than 60%, more preferably more than 70%, even more preferably more than 80% of the temperature reduction between the outlet of the first catalyst bed and the inlet of the second catalyst bed. Under certain circumstances, the heat removed in the heat exchanger may result in a lower bed inlet temperature of the bed downstream the heat exchanger than the bed inlet temperature of the bed upstream of the heat exchanger.

In a preferred embodiment, at least 10% of the total heat generated by the hydrogenation and/or hydrodeoxygenation reaction(s) in step (**a**) is removed from the reaction mixture via one or more of the heat exchangers. Preferably, at least 20%, even more preferably at least 30% of the total heat generated in the hydrogenation and/or hydrodeoxygenation step (**a**) is removed from the reaction mixture via one or more heat exchangers in between the catalyst beds.

On the coolant side of the heat exchanger any suitable medium can be used to export the heat. Preferably the medium is chosen such that the heat taken up by the medium can be used beneficially to heat up other process streams. Non limiting examples of suitable mediums to be used on the coolant side of the heat exchanger are preferably hot oil, steam or boiler feed water (to produce steam). Especially in case water or steam is used as a cooling medium, proper prevention of leaks in the heat exchanger may be required. Such prevention methods are known to the person skilled in the art. By using one or more heat exchanger(s) between the catalyst beds, part of the heat generated by the catalytic reactions can effectively be transported to/integrated with other processes that require heat, thereby saving energy costs and related CO₂ emissions. If no heat exchanger(s) would be used, the heat generated by the chemical reactions would be taken up by large amounts of cold quench gas or cold quench liquid, thereby effectively dumping a significant part of the heat to the atmosphere when the required amount of quench gas or quench liquid would be cooled down by air coolers and/or water trim coolers.

In another embodiment a liquid draw-off tray is installed below the first catalyst bed, where the gasses pass through the draw-off tray and remain inside the reactor. The process liquid that exists the first catalyst bed exits the reactor via the draw-off tray and is pumped through a heat exchanger that is outside the reactor to control the heat removal. A non limiting example to control the heat removal is that part of the liquid that exits the reactor from the draw-off tray may by-pass the heat exchanger to allow control of the temperature of the liquid being returned to the reactor. The process liquid that exits the heat exchanger, now at a lower temperature than the process liquid that entered the heat exchanger, combines with any liquid that has bypassed the heat exchanger before it is being re-introduced in the reactor. The whole process liquid that exits the reactor via the draw-off tray is being re-introduced in the reactor after at least part of it has passed through the heat exchanger. The re-introduced process liquid is being re-distributed over the reactor cross section, preferably in a re-distribution tray together with the gasses that had passed through the draw-off tray. Optionally, some quench gas or quench liquid can be added between the heat exchanger and the re-distribution tray. The quench gas or quench liquid can be added via a quench device that limits the radial temperature differences over the cross section of the reactor and catalyst bed.

Some of the advantages of a heat exchanger outside the reactor include more flexibility on the design of the duty of the heat exchanger, improved temperature control via the by-pass line, easier access in case cleaning of a fouled heat exchanger would be required and reduction of the high pressure reactor volume.

Advantages of an internal heat exchanger are that one less high pressure atmospheric pressure interface is needed and that the total effluent (liquid and gas) of the catalyst bed upstream the heat exchanger is cooled.

It will be understood that the heat exchanging in the reactor or outside the reactor does not need to be limited to the first catalyst bed only. For each of the catalyst beds it can be decided if a heat exchanger is being installed or not. Also, it is part of the invention that no heat is being exchanged after the first catalyst bed, but heat is being exchanged after one or more of the subsequent catalyst bed(s).

According to a further preferred embodiment of the present disclosure, the process comprises one or more additional steps selected from a hydroisomerization step (**b**), a selective hydrocracking step (**c**) and/or a hydrodearomatization step (**d**).

The effluent from the hydrodeoxygenation step (**a**) may contain significant amounts of n-paraffins in the C9-C24 range. It is preferable to improve the cold flow properties of the liquid product(s) from the process of the present invention by processing at least part of the effluent from the hydrogenation/hydrodeoxygenation step (**a**) in a subsequent hydroisomerization step (step (**b**)). In the hydroisomerization step (**b**) the stream comprising n-paraffins is contacted with a hydroisomerization catalyst under hydroisomerization conditions to at least isomerize part of the n-paraffins. Hydroisomerization processes and suitable hydroisomerization catalysts are known to the person skilled in the art.

It may also be desirable to selectively crack at least part of the hydrodeoxygenation effluent in a selective hydrocracking step (step (**c**)). In the selective hydrocracking step (**c**) the stream comprising n-paraffins are contacted with a selective hydrocracking catalyst under hydrocracking conditions to at least crack part of the n-paraffins to molecules with a lower boiling range. Hydrocracking processes and suitable hydrocracking catalysts are known to the person skilled in the art. The selective hydrocracking step (**c**) may be combined with the hydroisomerization step (**b**).

The hydroisomerization step (**b**) and/or selective hydrocracking step (**c**) may follow the hydrogenation/hydrodeoxygenation step (**a**) without any separation step in between the steps. An example of such an hydroisomerization step (**b**) without intermediate separation step is described in e.g. EP2121876. In another embodiment the effluent from the hydrogenation or hydrodeoxygenation step (**a**) is separated into a liquid phase and a gaseous phase. The liquid phase is sent to the hydroisomerization step (**b**) and/or selective hydrocracking step (**c**) and/or hydrodearomatization step (**d**) together with a hydrogen containing gas stream, not being the gaseous phase as obtained directly from the separation from the liquid phase. The liquid phase from step (**a**) may be stripped from dissolved contaminants such as e.g. CO, CO₂, H₂O, H₂S and NH₃ before being sent to the hydroisomerization step (**b**) and/or selective hydrocracking step (**c**). The hydroisomerization step (**b**) and/or hydrocracking step (**c**) may be in co-current mode or in counter-current mode, preferably in co-current mode.

The effluent from the hydrogenation and/or hydrodeoxygenation step (**a**) may contain significant amounts of aromatics. It may be preferable to improve the properties of the liquid product(s) from the process of the present invention by processing at least part of the effluent from the hydrogenation and/or hydrodeoxygenation step (**a**) in a subsequent hydrodearomatization step (**d**). In the hydrodearomatization step (**d**) the stream comprising aromatics is contacted with a hydrodearomatization catalyst under hydrodearomatization conditions to at least saturate part of the aromatics. Hydrodearomatization processes and suitable hydrodearomatization catalysts are known to the person skilled in the art. The hydrodearomatization step (**d**) may follow the hydrogenation/hydrodeoxygenation step (**a**) without any separation step in between the steps. Preferably the effluent from the hydrogenation and/or hydrodeoxygenation step (**a**) is separated into a liquid phase and a gaseous phase. At least part of the liquid phase, optionally after first fractionating the liquid phase, is sent to the hydrodearomatization step (**d**) together with a hydrogen containing gas stream, not being the gaseous phase as obtained directly from the separation from the liquid phase. The liquid phase from step (**a**) may be stripped from dissolved contaminants such as e.g. CO, CO₂, H₂O, H₂S and NH₃ before being sent to the hydrodearomatization step (**d**). The hydrodearomatization step (**d**) may be in co-current mode or in counter-current mode, preferably in co-current mode. In case both hydrodearomatization and hydroisomerization and/or selective hydrocracking is desired, the hydrodearomatization step (**d**) may preceed the hydroisomerization step (**b**) and/or selective hydrocracking step (**c**), but it may also follow after the hydroisomerization step (**b**) and/or selective hydrocracking step (**c**). In case the hydrodearomatization step (**d**) follows the hydroisomerization step (**b**) and/or selective hydrocracking step (**c**) without separation between the hydrogenation and/or hydrodeoxygenation step (**a**) and the hydroisomerization step (**b**) and/or selective hydrocracking step (**c**), it is advantageous and preferable to separate the effluent of the hydroisomerization step (**b**) and/or selective hydrocracking step (**c**) into a liquid phase and a gaseous phase. At least part of the liquid phase, optionally after first fractionating the liquid phase, is sent to the hydrodearomatization step (**d**) together with a hydrogen containing gas stream, not being the gaseous phase as obtained directly from the separation from the liquid phase. The liquid phase from step (**b**) or step (**c**) may be stripped from dissolved contaminants such as e.g. CO, CO₂, H₂O, H2S and NH3 before being sent to the hydrodearomatization step (**d**).

In the process of the present invention hydrogen is used for the chemical conversions of the fresh feed. Preferably, the chemical hydrogen consumption in step (**a**) is at least 1.2 % wt on fresh feed.

The effluent from any one of steps **a**/**b**/**c**/**d** may be sent to fractionation (according to procedures well known in the art) to produce a gasoil fraction, a diesel fraction, a kerosene fraction, etc, as desired.

### DESCRIPTION OF THE DRAWINGS

The drawings represent two non-limiting examples of the invention.

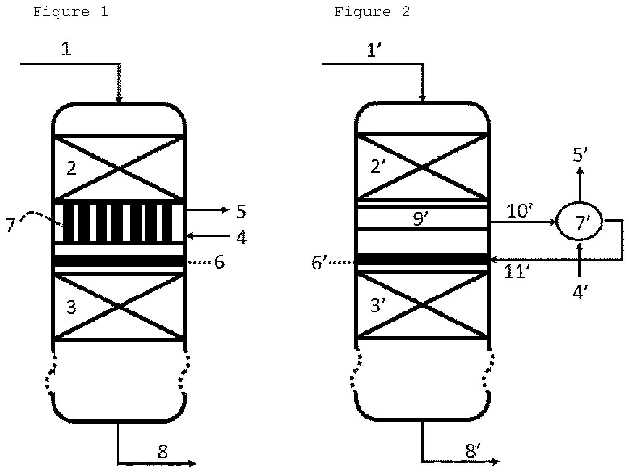

Figure 1. Is a schematic drawing of a feed **1** [(renewable feed + optional diluent) + hydrogen] entering a reactor comprising two catalyst beds (**2** and **3**), with a heat exchanger **7** and a re-distribution tray **6** located inside the reactor in between the two catalyst beds. External cooling medium **4** enters the heat exchanger, circulates through the heat exchanger and exits as heated cooling medium **5**. The hydrotreating of the feed continues in the next catalyst bed at a lower temperature than the outlet temperature of catalyst bed 2. The hydrotreated effluent **8** leaves the reactor.
Figure 2. Is a schematic drawing of a feed **1'** [(renewable feed + optional diluent) + hydrogen] entering a reactor comprising two catalyst beds (**2'** and **3'**), with a liquid draw-off tray **9'** and a re-distribution tray **6'** located inside the reactor in between the two catalyst beds and with a heat exchanger **7'** outside the reactor. Hot process liquid **10'** is drawn from the reactor, then passes through the heat exchanger **7'**, where external medium **4'** is used for cooling, coming out of the heat exchanger as heated cooling medium **5'**, whereafter cooled process liquid **11'** is returned to the reactor for further hydrotreatment in the next catalyst bed at a lower temperature than the outlet temperature of catalyst bed 2'. The hydrotreated effluent **8'** leaves the reactor.

## Claims

1. Process for the hydrotreatment of a feedstock comprising materials from renewable sources, the process comprising
(**a**) in a reactor performing (a) hydrogenation and/or hydrodeoxygenation reaction(s) which comprise(s) contacting hydrogen and said feedstock with a catalyst under hydrogenation and/or hydrodeoxygenation conditions, the catalyst being distributed over two or more catalyst beds, and each catalyst bed having an inlet and an outlet;
wherein at least a part of the heat generated by the hydrogenation and/or hydrodeoxygenation reaction(s) is removed from the reaction mixture between the catalyst beds via one or more heat exchangers.

2. A process according to claim 1, wherein the amount of heat removed in the one or more heat exchangers results in at least 50% reduction of the temperature between the outlet of the catalyst bed preceding the one or more heat exchanger(s) and the inlet of the catalyst bed immediately following after said one or more heat exchanger (s) .

3. A process according to claim 1 or 2, wherein at least 10% of the total heat generated by the hydrogenation and/or hydrodeoxygenation reaction(s) in step (a) is removed from the reaction mixture via one or more of the heat exchangers.

4. A process according to any one of claims 1 - 3, wherein in addition to the feedstock and hydrogen, also a diluent is introduced into step (**a**).

5. A process according to any one of claims 1 - 4, wherein the process comprises one or more additional steps selected from a hydroisomerization step (**b**), a selective hydrocracking step (**c**) and/or a hydrodearomatization step (**d**).

6. A process according to any one of claims 1 - 5, wherein the heat is exported via the one or more heat exchangers using hot oil or steam or boiler feed water as a cooling medium.

7. A process according to any one of claims 1 - 6, wherein the chemical hydrogen consumption in step (**a**) is at least 1.2 % wt on fresh feed.

8. A process according to any one of claims 1 - 7, wherein the hydrogenation and/or hydrodeoxygenation conditions at least comprise a process temperature in the range of from 200 to 400 °C, preferably of from 240 to 390 °C, more preferably of from 260 to 385 °C.

9. A process according to any one of claims 1 - 8, wherein the feedstock comprises triglycerides, diglycerides, monoglycerides and/or fatty acids.

10. A process according to any one of claims 1 - 8, wherein the feedstock comprises liquids from biomass and waste liquefaction processes.
